# FASCICULE DE BREVET EUROPEEN

(11) **EP 1 391 361 B1**
(45) Date de publication et mention de la délivrance du brevet: **23.02.2011**
(21) Numéro de dépôt: 03018216.6
(22) Date de dépôt: 11.08.2003
(51) Int. Cl.: B60T 7/06, F16C 11/06

(54) **Agencement pour l'accouplement d'une tige de commande d'un servomoteur**
Verbindungsvorrichtung für eine Betätigungsstange eines Bremskraftverstärkers
Coupling arrangement for an actuation rod of a brake booster

(30) Priorité: 23.08.2002 FR 0210516
(43) Date de publication de la demande: 25.02.2004
(73) Titulaire: ROBERT BOSCH GMBH, 70442 Stuttgart (DE)
(72) Inventeur: Richard, Philippe, 77500 Chelles (FR); Batista, Silverion, 93130 Noisy Le Sec (FR); Verbo, Ulysse, 93600 Aulnay-Sous-Bois (FR); Hurwic, Aleksander, 75020 Paris (FR)
(74) Mandataire: Hurwic, Aleksander Wiktor

(56) Documents cités:
- EP-A- 0 229 350
- EP-A- 0 413 623
- EP-A- 0 896 162
- FR-A- 2 713 729

## Description

L'invention concerne un agencement pour l'accouplement d'une tige de commande d'un servomoteur à une barre d'actionnement portant une pédale de frein.

L'invention concerne plus précisément un agencement pour l'accouplement démontable d'une tige d'orientation axiale de commande d'un servomoteur d'assistance de freinage de véhicule automobile à une pédale de frein du véhicule, du type dans lequel une extrémité de la tige axiale de commande est accouplée au moins en rotation d'axe transversal à une partie intermédiaire d'une barre d'actionnement sensiblement verticale, dont une extrémité est articulée autour d'un axe sensiblement horizontal par rapport à un élément de structure de caisse du véhicule, et dont l'autre extrémité porte la pédale de frein.

On connaît de nombreux exemples d'agencements de ce type.

Selon une première conception connue, il a été proposé des agencements dans lesquels l'extrémité de la tige de commande et la partie intermédiaire de la barre sont traversées par un axe commun qui est immobilisé transversalement par une goupille.

La réalisation de l'accouplement d'un tel agencement nécessite donc à la fois un positionnement axial et un positionnement transversal de l'extrémité de la tige de commande par rapport à la partie intermédiaire de la barre d'actionnement. De surcroît un tel accouplement nécessite une opération de verrouillage de la goupille.

Un autre inconvénient de cette conception est que la partie intermédiaire de la barre d'actionnement n'est pas susceptible de déplacement par rapport à la tige de commande du servomoteur.

De ce fait, si le véhicule subit un choc violent provoquant une déformation suivant une direction transversale du tablier sur lequel est fixé le servomoteur, celui-ci peut entraîner la barre d'actionnement et déplacer transversalement la barre d'actionnement de la pédale de frein qui risque alors de causer des lésions aux chevilles du conducteur.

Pour remédier à ces inconvénients, on a proposé, notamment dans les documents EP-A1-0.896.162 et EP-B1-0.229.350, un agencement du type décrit ci dessus comportant une liaison emboîtable de type rotule, pouvant être facilement montée ou démontée, et agencée entre l'extrémité de la tige de commande du servomoteur et la partie intermédiaire de la barre d'actionnement. Dans ces documents, l'extrémité de la tige de commande est conformée en tête sphérique et elle est reçue dans un élément rapporté qui comporte une capsule sphérique de forme complémentaire, qui comporte des moyens d'emboîtage de la tête dans la capsule, et qui est lui-même emboîté dans la partie intermédiaire de la barre de commande.

L'inconvénient d'une telle conception est que la capsule sphérique, qui prend appui sur la tête sphérique de la tige de commande du servomoteur à chaque freinage, n'est pas directement liée à la barre d'actionnement qui porte la pédale de frein. De ce fait, les efforts répétés qu'exerce le conducteur sur la capsule sont transmis non seulement à la tige de commande, mais aussi aux moyens d'emboîtage qui sont interposés entre l'élément rapporté qui comporte la capsule et la barre d'actionnement. Cette conception risque donc au fur et à mesure des actionnements répétés de la barre d'actionnement, de provoquer une usure de ces moyens d'emboîtement, et à terme, une rupture de ceux-ci, ce qui peut provoquer une désolidarisation de la capsule et de la barre d'actionnement.

Pour remédier à cet inconvénient, on a proposé une nouvelle conception dans laquelle la tête de la tige de commande est sollicitée directement par la barre d'actionnement.

Dans ce but, on a proposé un agencement dans lequel l'extrémité de la tige de commande, conformée sous la forme d'une tête sphérique, est reçue dans un bossage complémentaire formé dans une paroi de la partie intermédiaire de la barre d'actionnement. Dans cette configuration, la tête est maintenue au contact dudit bossage par l'intermédiaire de moyens élastiques de rétention axiale portés par la capsule, tels que des pattes élastiques qui prennent appui au dos de la tête sphérique pour la solliciter au contact du bossage.

L'inconvénient de cette conception est qu'il est nécessaire soit d'utiliser un outil de forme complexe pour écarter ces pattes élastiques, soit de rompre ces pattes élastiques pour pouvoir désaccoupler la tige de commande de la partie intermédiaire de la barre d'actionnement.

L'invention propose une nouvelle conception dans laquelle la tige de commande peut être accouplée ou désaccouplé à volonté de la partie intermédiaire de la barre d'actionnement.

Dans ce but, l'invention propose un agencement du type décrit précédemment, caractérisé en ce que la tête est maintenue au contact dudit bossage par l'intermédiaire de moyens élastiquement déformables de rétention axiale qui sont interposés entre la partie intermédiaire de la barre d'actionnement et la tige de commande, et dont la déformation est commandée par des moyens de déverrouillage accessibles depuis l'extérieur de la partie intermédiaire de la barre d'actionnement, pour former une liaison de type rotule démontable à volonté.

Selon d'autres caractéristiques de l'invention :
- la partie intermédiaire de la barre d'actionnement est conformée sous la forme d'un profilé en U d'orientation sensiblement verticale qui comporte :
   - deux ailes entre lesquelles est reçue la tige de commande et entre lesquelles sont agencés les moyens élastiquement déformables de rétention axiale et les moyens de déverrouillage, et
   - une paroi de jonction, agencée transversalement entre les deux ailes, dans laquelle est formé le bossage recevant la portée sphérique de la tête de la tige de commande,
- la partie intermédiaire de la barre d'actionnement reçoit entre ses ailes :
   - des premiers moyens de maintien, destinés à immobiliser au droit de la base de la tête de la tige une agrafe élastique qui forme les moyens élastiquement déformables de rétention axiale destinés à immobiliser axialement la tête de la tige contre le bossage, et qui est susceptible d'être déformée élastiquement par les moyens de déverrouillage pour libérer la tête,
   - des seconds moyens de maintien des moyens de déverrouillage,
- l'agencement comporte une platine comportant les premier et second moyens de maintien, qui est reçue entre les ailes de la partie intermédiaire de la barre d'actionnement, dont un premier alésage est traversé avec jeu par la tige pour permettre l'articulation de ladite tige, et qui comporte :
   - un logement vertical qui débouche dans la partie supérieure de la platine, qui coupe le premier alésage sensiblement au droit de la base de la tête de la tige, et qui forme les premiers moyens de maintien de l'agrafe élastique verticale formant les moyens de rétention axiale,
   - une cavité, qui débouche dans le logement vertical en regard de l'agrafe et dans une face de la platine en regard d'une ouverture de la partie intermédiaire de la barre d'actionnement, et qui forme les seconds moyens de maintien des moyens de déverrouillage destinés à déformer élastiquement l'agrafe,
- la platine est fixée entre les ailes de la partie intermédiaire de la barre d'actionnement par l'intermédiaire d'au moins deux goupilles élastiques qui traversent des perçages de la platine et des perçages des ailes de la partie intermédiaire de la barre d'actionnement.
- l'agrafe est une agrafe en épingle à cheveux qui est destiné à chevaucher la tige de commande et dont les branches verticales sensiblement parallèles sont mobiles entre :
   - une position rapprochée, vers laquelle elles sont rappelées élastiquement, dans laquelle elles sont parallèles et prennent axialement appui sur une portée de rétention de la tête de la tige qui est opposée à sa portée sphérique de manière à immobiliser la tête contre le bossage, et
   - une position écartée, dans laquelle elles peuvent être temporairement sollicitées élastiquement en écartement l'une de l'autre par les moyens de déverrouillage suivant la direction transversale, pour libérer la tête et permettre le retrait de la tige hors de la platine,
- l'alésage de la platine, qui reçoit la tige de commande, est d'un diamètre correspondant sensiblement au diamètre maximal de la portée de rétention de la tige de commande,
- l'agrafe en épingle à cheveux comporte une branche transversale supérieure élastique de jonction qui réunit les branches verticales parallèles et qui repose sur une paroi de la platine, qui s'étend parallèlement à la direction axiale entre les bords axiaux du logement formant les premiers moyens de maintien, et qui s'étend transversalement entre les branches verticales de l'agrafe pour déterminer la position verticale de l'agrafe,
- les moyens de déverrouillage comportent un barillet cylindrique, qui est monté à rotation dans un second alésage axial constituant la cavité de la platine formant les seconds moyens de maintien, qui est agencé entre les extrémités libres des branches verticales de l'agrafe, dont une première extrémité comportant des moyens d'entraînement débouche dans une face avant de la platine en regard d'un perçage pratiqué dans la paroi de jonction de la partie intermédiaire de la barre d'actionnement, et dont un tronçon intermédiaire comporte deux méplats diamétralement opposés dont les faces de fond, qui reçoivent les branches verticales de l'agrafe, sont distantes l'une de l'autre d'une distance correspondant à l'écartement des branches parallèles verticales de l'agrafe dans leur position rapprochée, pour que la rotation du barillet détermine une position écartée des branches verticales selon laquelle elles sont distantes du diamètre de la périphérie du barillet,
- une seconde extrémité opposée du barillet comporte un doigt qui est reçu dans une rainure en arc de cercle formée dans le fond du second alésage, dont un premier bord est destiné à former pour le doigt une butée qui correspond à la position angulaire du barillet associée à la position rapprochée des branches parallèles verticales de l'agrafe, et dont un second bord est destiné à former pour le doigt une butée qui correspond à la position angulaire du barillet associée à la position écartée des branches verticales de l'agrafe.
- les moyens d'entraînement de la première extrémité du barillet comportent une empreinte femelle, notamment une empreinte à six pans creux,
- la portée de rétention de la tête de la tige de commande est conformée sous la forme d'un tronc de sphère :
   - dont un diamètre minimal arrière correspond au diamètre de la tige de commande, et
   - dont un diamètre maximal est supérieur à l'écartement des branches parallèles verticales de l'agrafe dans leur position rapprochée et est inférieur à l'écartement des branches parallèles verticales de l'agrafe dans leur position écartée,
- la tête de la tige de commande comporte une portion de jonction sensiblement tronconique qui est interposée axialement entre sa portée sphérique et sa portée de rétention, pour permettre l'introduction de l'extrémité de la tige de commande au travers de l'agrafe sans actionner le barillet,
- l'agencement comporte un pion cylindrique, formant les premiers moyens de maintien de l'agrafe, qui s'étend entre les ailes à partir de la paroi de jonction de la partie intermédiaire de la barre d'actionnement et dans une gorge duquel est destinée à s'emboîter une branche arrondie transversale supérieure élastique de jonction d'une agrafe en épingle à cheveux dont les branches verticales sensiblement parallèles sont destinées à chevaucher la tige et à immobiliser axialement sa tête contre le bossage,
- la branche arrondie transversale supérieure élastique de jonction de l'agrafe s'étend sur plus de 180 degrés dans la gorge du pion cylindrique, pour déterminer la position verticale de l'agrafe,
- les branches verticales sensiblement parallèles de l'agrafe sont mobiles entre :
   - une position verrouillée, dans laquelle elles sont rappelées élastiquement l'une vers l'autre, une première branche étant immobilisée par les moyens de déverrouillage et la seconde branche étant immobilisée contre un bossage de l'aile voisine, dans laquelle elles sont parallèles et prennent axialement appui sur une portée de rétention de la tête de la tige qui est opposée à sa portée sphérique de manière à immobiliser la tête contre le bossage, et
   - une position déverrouillée, dans laquelle la première branche verticale est déverrouillée par les moyens de déverrouillage puis peut être temporairement sollicitée élastiquement par la tige en écartement transversal de l'autre branche, pour libérer la tête et permettre le retrait de la tige hors de la partie intermédiaire de la barre d'actionnement, la seconde branche demeurant immobilisée,
- l'aile de la partie intermédiaire de la barre d'actionnement qui est voisine de la première branche de l'agrafe comporte une fente verticale destiné à permettre le passage de la première branche hors de la partie intermédiaire de la barre d'actionnement lorsque ladite première branche est écartée par la tige,
- les moyens de déverrouillage comportent un pêne, qui est monté à rotation autour d'un axe dont une première extrémité comportant des moyens d'entraînement débouche par l'intermédiaire d'un perçage formant une partie des seconds moyens de maintien dans la paroi de jonction de la partie intermédiaire de la barre d'actionnement, et qui est mobile entre une position de blocage dans laquelle il fait obstacle à l'écartement transversal de la première branche de l'agrafe en épingle à cheveux et une position escamotée il ne fait pas obstacle à l'écartement transversal de la première branche de l'agrafe et dans laquelle la première branche de l'agrafe en épingle à cheveux peut être sollicitée en écartement par la tige,
- l'axe de rotation du pêne est agencé entre les branches verticales de l'agrafe et le pêne s'étend parallèlement à la direction axiale entre deux flasques transversaux solidaires de l'axe, de manière qu'en position de blocage la première branche soit immobilisée transversalement entre un tronçon intermédiaire de l'axe agencé entre les flasques et le pêne, et de manière qu'en position escamotée le pêne soit pivoté sous la première branche pour en permettre l'écartement.
- le bossage de l'aile qui est voisine de la seconde branche de l'agrafe fait saillie à l'intérieur de la partie intermédiaire de la barre d'actionnement suivant un encombrement transversal destiné à permettre l'immobilisation transversale avec jeu de la seconde branche en position verrouillée de l'agrafe associée à la position de blocage du pêne,
- l'axe de rotation du pêne comporte, sur son tronçon intermédiaire, un méplat qui est agencé à l'opposé du pêne pour immobiliser sans jeu la seconde branche contre le bossage lorsque le pêne occupe sa position escamotée, et pour faciliter ainsi l'écartement de la première branche de l'agrafe,
- une seconde extrémité de l'axe du pêne est montée à rotation dans une entretoise, formant l'autre partie des seconds moyens de maintien, qui est fixée entre les ailes de la partie intermédiaire de la barre d'actionnement par l'intermédiaire d'au moins deux goupilles élastiques qui traversent des perçages de l'entretoise et des perçages des ailes de la partie intermédiaire de la barre d'actionnement.
- les moyens d'entraînement de la première extrémité de l'axe du pêne comportent une empreinte femelle, notamment une empreinte à six pans creux,
- la portée de rétention de la tête de la tige de commande est conformée sous la forme d'un tronc de sphère :
   - dont un diamètre minimal arrière correspond au diamètre de la tige de commande, et
   - dont un diamètre maximal est supérieur à l'écartement des branches parallèles verticales de l'agrafe dans leur position verrouillée et est inférieur à l'écartement des branches parallèles verticales de l'agrafe lorsqu'elles occupent leur position déverrouillée et que la première branche est écartée transversalement par la tige d'actionnement du servomoteur.

D'autres caractéristiques et avantages de l'invention apparaîtront à la lecture de la description détaillée qui suit pour la compréhension de laquelle on se reportera aux dessins annexés dans lesquels :
- la figure 1 est un schéma de principe d'un agencement selon un état antérieur de la technique,
- la figure 2 est une vue avant en perspective assemblée de l'agencement selon un premier mode de réalisation de l'invention,
- la figure 3 est une vue avant en perspective éclatée avec arrachement par un plan axial de l'agencement selon le premier mode de réalisation de l'invention,
- la figure 4 est une vue arrière en perspective assemblée avec arrachement par un plan axial de l'agencement selon le premier mode de réalisation de l'invention représenté dans une position rapprochée des branches verticales de l'agrafe,
- la figure 5 est une vue de détail en coupe transversale par le plan 5-5 de la figure 4 de la position du doigt du barillet dans la rainure,
- la figure 6 est une vue arrière en perspective assemblée avec arrachement par un plan axial de l'agencement selon le premier mode de réalisation de l'invention représenté dans une position écartée des branches verticales de l'agrafe,
- la figure 7 est une vue de détail en coupe transversale par le plan 7-7 de la figure 6 de la position du doigt du barillet dans la rainure,
- la figure 8 est une vue en coupe transversale par le plan 8-8 de la figure 11 de l'agencement selon un second mode de réalisation de l'invention représenté dans une position verrouillée des branches verticales de l'agrafe,
- la figure 9 est une vue en coupe transversale par le plan 9-9 de la figure 11 de l'agencement selon le second mode de réalisation de l'invention représenté dans une position déverrouillée des branches verticales de l'agrafe, la première branche n'étant pas sollicitée par la tige d'actionnement du servomoteur,
- la figure 10 est une vue en coupe transversale par le plan 10-10 de la figure 11 de l'agencement selon le second mode de réalisation de l'invention représenté dans une position déverrouillée des branches verticales de l'agrafe, la première branche étant sollicitée par la tige d'actionnement du servomoteur, et
- la figure 11 est une vue arrière en perspective assemblée avec arrachement par un plan axial de l'agencement selon le second mode de réalisation de l'invention représenté dans une position verrouillée des branches verticales de l'agrafe.

Dans la description qui va suivre, des chiffres de référence identiques désignent des pièces identiques ou ayant des fonctions similaires.

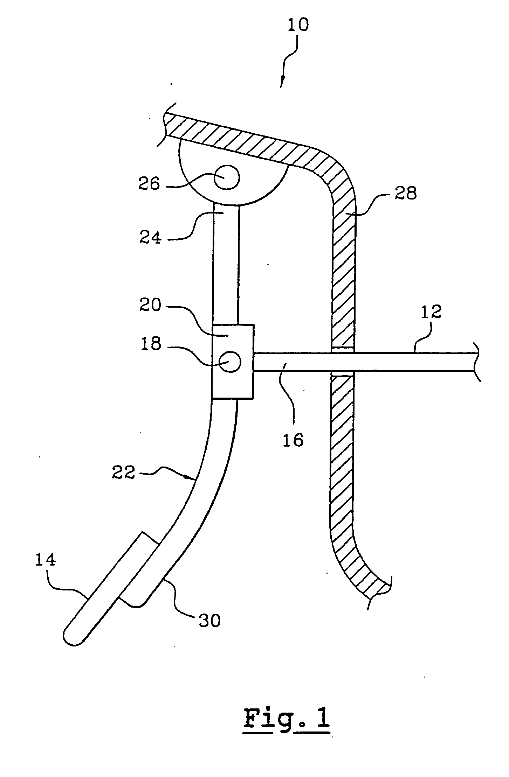

On a représenté à la figure 1 l'ensemble d'un agencement 10 conventionnel pour l'accouplement démontable d'une tige 12 d'orientation axiale de commande d'un servomoteur (non représenté) d'assistance de freinage de véhicule automobile à une pédale 14 de frein du véhicule. De manière connue, dans un tel agencement 10, une extrémité 16 de la tige 12 axiale de commande est accouplée au moins en rotation d'axe transversal, par exemple par l'intermédiaire d'un pivot 18, à une partie intermédiaire 20 d'une barre 22 d'actionnement sensiblement verticale, dont une extrémité 24 est articulée autour d'un axe 26 sensiblement horizontal par rapport à un élément 28 de structure de caisse du véhicule, et dont l'autre extrémité 30 porte la pédale 14 de frein. Le pivot 18 comporte par exemple un axe qui est verrouillé transversalement par l'intermédiaire d'au moins une goupille (non représentés).

Cette conception présente notamment l'inconvénient, lors du montage, de nécessiter une opération de positionnement axial et de positionnement transversal de l'extrémité 16 de la tige 12 de commande par rapport à la partie intermédiaire 20 de la barre 22 d'actionnement, et une opération de verrouillage de la goupille, ce qui fait du montage une opération particulièrement délicate.

Pour remédier à cet inconvénient, l'invention propose une nouvelle conception comportant un montage à rotule déverrouillable interposé entre de la tige 12 et la partie intermédiaire 20 de la barre 22 d'actionnement.

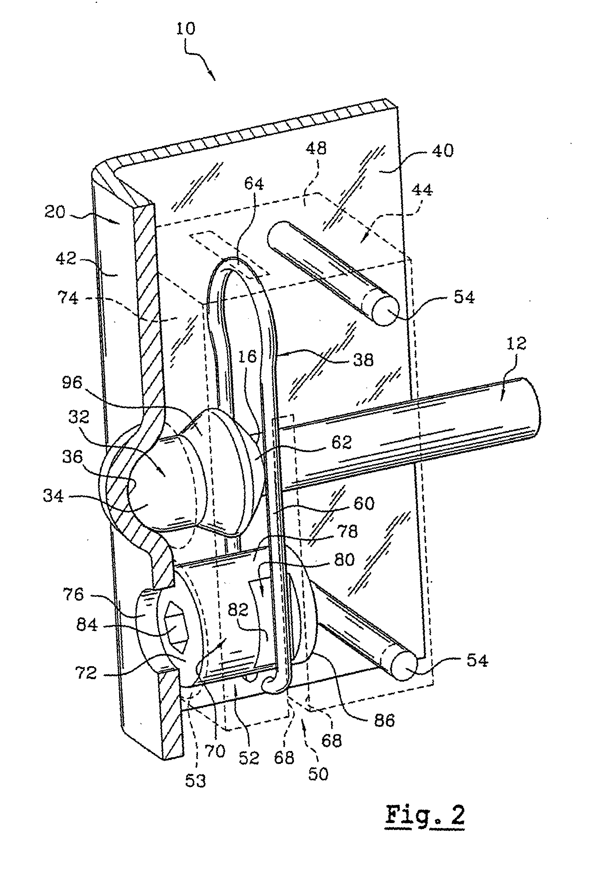

De manière connue, comme l'illustrent les figures 2, 3, 4, 6 et 11, l'invention propose un agencement 10 dans lequel l'extrémité 16 de la tige 12 de commande comporte une tête 32 dont au moins une portée 34 sphérique est reçue dans un bossage 36 complémentaire formé dans une paroi de la partie 20 intermédiaire de la barre 22 d'actionnement.

Cette caractéristique est avantageusement complétée en ce que, conformément à l'invention, la tête 32 est maintenue au contact dudit le bossage 36 par l'intermédiaire de moyens 38 élastiquement déformables de rétention axiale qui sont interposés entre la partie 20 intermédiaire de la barre d'actionnement et la tige 12 de commande, et dont la déformation est commandée par des moyens 52 de déverrouillage accessibles depuis l'extérieur de la partie 20 intermédiaire de la barre 22 d'actionnement, pour former une liaison de type rotule démontable à volonté.

A cet effet, comme l'illustrent les figures 2, 3, et 8 à 11 la partie intermédiaire 20 de la barre d'actionnement est conformée sous la forme d'un profilé en U d'orientation sensiblement verticale qui comporte :
- deux ailes 40 entre lesquelles est reçue la tige 12 de commande et entre lesquelles sont agencés les moyens 38 élastiquement déformables de rétention axiale et les moyens 52 de déverrouillage, et
- une paroi 42 de jonction, agencée transversalement entre les deux ailes 40, dans laquelle est formé le bossage 36 recevant la portée sphérique 34 de la tête 32 de la tige 12 de commande.

De manière connue, le bossage 36 est venu de matière avec la partie intermédiaire 20 de la barre 22 d'actionnement et il est par exemple réalisé par emboutissage du profilé qui forme la partie intermédiaire 20 de la barre 22 d'actionnement. De cette manière, le bossage 36 permet un appui direct de la barre 22 sur la tête 32 de la tige 12 de commande, ce qui évite les risques de rupture de l'accouplement ainsi réalisé.

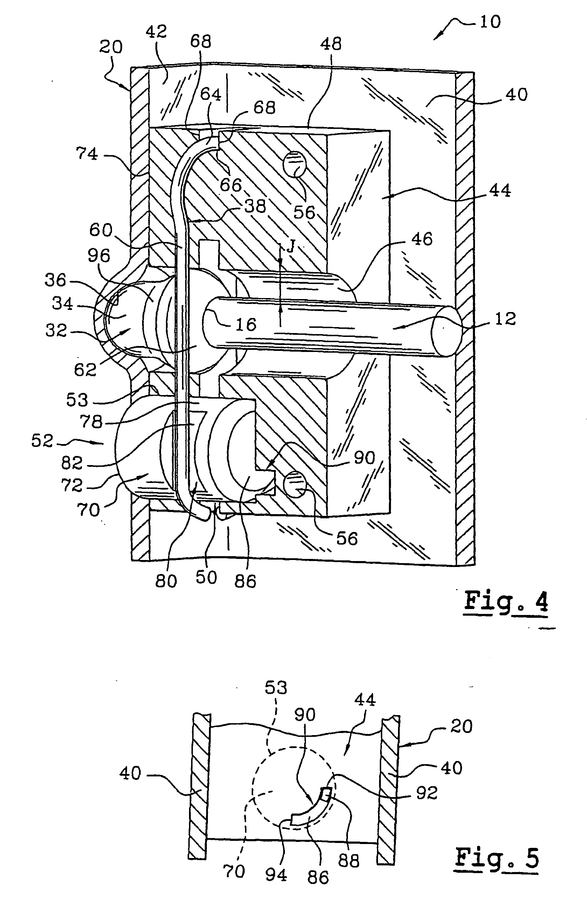

A cet effet, comme l'illustrent les figures 4, 6 et 11, la partie intermédiaire 20 de la barre 2 d'actionnement reçoit entre ses ailes 40 des premiers moyens 50 de maintien, destinés à immobiliser au droit de la base de la tête 32 de la tige 12 une agrafe 38 élastique qui forme les moyens élastiquement déformables de rétention axiale destinés à immobiliser axialement la tête 32 de la tige 12 contre le bossage 36, et qui est susceptible d'être déformée élastiquement par les moyens de déverrouillage pour libérer la tête 32, et des seconds moyens 53 de maintien des moyens de déverrouillage.

Comme l'illustrent les figures 2 à 7, dans un premier mode de réalisation de l'invention, l'agencement 10 comporte une platine 44, qui est reçue entre les ailes 40 de la partie 20 intermédiaire de la barre d'actionnement et qui comporte les premiers moyens de maintien 50 et les seconds moyens de maintien 53. Ces moyens seront explicités plus en détail dans la suite de la présente description.

Un premier alésage 46 de la platine 44 est traversé avec un jeu radial "J" par la tige 12 pour permettre son articulation autour de la rotule formée de la portée sphérique 34 et du bossage 36.

A l'intérieur de cette platine 44, comme l'illustrent les figures 2, 3, 4 et 6, est agencé un logement 50 vertical, formant les premiers moyens de maintien 50 des moyens de rétention axiale, qui débouche dans la partie supérieure 48 de la platine 44 et qui coupe le premier alésage 46 sensiblement au droit de la base de la tête 32 de la tige 12, pour recevoir et immobiliser axialement une agrafe 38 élastique formant les moyens élastiquement déformables de rétention axiale. L'agrafe 38 est destinée à immobiliser axialement la tête 32 de la tige 12 contre le bossage 36, et elle est susceptible d'être déformée élastiquement par les moyens de déverrouillage 52 pour libérer la tête 32.

A l'intérieur de la platine 44 est aussi agencée une cavité 53, formant les seconds moyens 53 de maintien des moyens de déverrouillage, qui débouche dans le logement 50, et qui reçoit les moyens 52 de déverrouillage destinés à déformer élastiquement l'agrafe 38. La cavité 53 débouche dans une face 74 de la platine 44 en regard d'une ouverture 76 de la partie intermédiaire 20 de la barre d'actionnement pour permettre la manipulation des moyens 52 de déverrouillage. Ces moyens 52 de déverrouillage seront décrits ultérieurement plus en détail dans la suite de la présente description.

Par exemple, et de manière non limitative de l'invention, la platine 44 est fixée entre les ailes 40 de la partie 20 intermédiaire de la barre d'actionnement par l'intermédiaire d'au moins deux goupilles élastiques 54 qui traversent des perçages 56 de la platine et des perçages 58 des ailes 40 de la partie 20 intermédiaire de la barre d'actionnement.

En variante, la platine 44 pourrait être traversée par des vis ou emboîtée dans la partie 20 intermédiaire de la barre d'actionnement. On remarquera que, comme la platine 44 n'est pas destinée à transmettre les efforts de freinage qui sont exercés sur la barre 20 d'actionnement à la tige 12 de commande, ses moyens de fixation dans la partie 20 intermédiaire peuvent être dimensionnés, conformément aux législations en vigueur, pour résister à un effort d'arrachement important.

Dans le mode de réalisation préféré de l'invention, l'agrafe 38 est constituée d'une agrafe en épingle à cheveux, présentant sensiblement la forme d'un U inversé, et elle est destinée à chevaucher la tige 12 de commande sensiblement à la jonction de la tige 12 et de la tête 32.

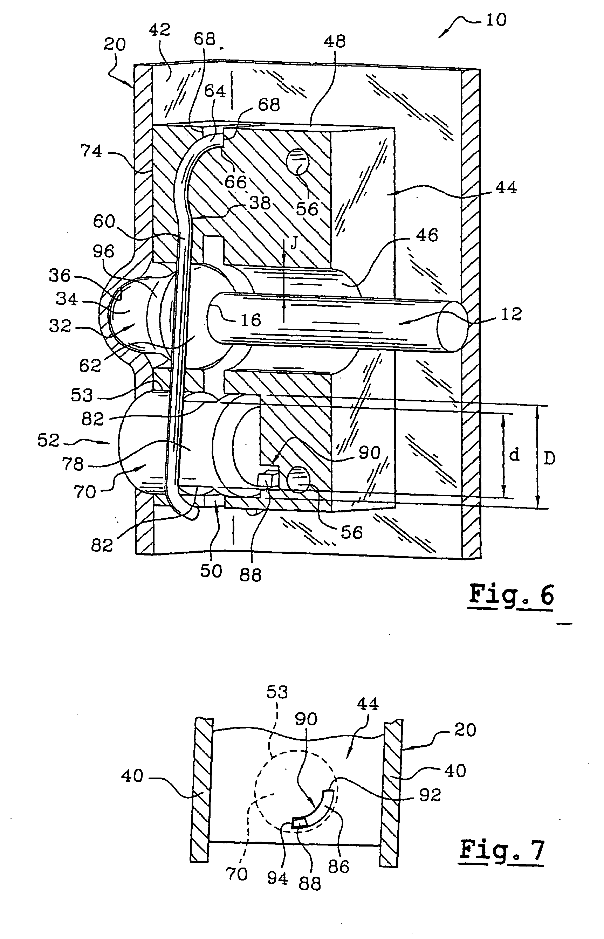

Les branches verticales 60 sensiblement parallèles de l'agrafe 38 sont mobiles entre :
- une position rapprochée, qui a été représentée à la figure 4, dans laquelle elles sont parallèles et prennent axialement appui sur une portée 62 de rétention de la tête 32 de la tige 12 qui est opposée à sa portée sphérique 34 de manière à immobiliser la tête 32 contre le bossage 36, et
- une position écartée, qui a été représentée à la figure 6, dans laquelle elles peuvent être sollicitées élastiquement en écartement l'une de l'autre par les moyens 52 de déverrouillage suivant la direction transversale pour libérer la tête 32 et permettre le retrait de la tige 12 hors de la platine 44.

L'agrafe 38 en épingle à cheveux comporte aussi une branche 64 supérieure de jonction, globalement transversale, qui réunit les branches 60 verticales parallèles. La branche 64 est par exemple conformée en arc de cercle pour conférer une élasticité aux branches 60, mais cette disposition n'est pas limitative de l'invention.

La branche transversale 64 repose sur une paroi 66 de la platine 44 qui s'étend parallèlement à la direction axiale entre les bords axiaux 68 du logement 50 et transversalement entre les branches 60 verticales de l'agrafe pour déterminer la position verticale de l'agrafe 38.

Avantageusement, la portée 62 de rétention de la tête 32 de la tige 12 de commande est conformée sous la forme d'un tronc de sphère, dont un diamètre minimal arrière correspond au diamètre de la tige de commande, et dont un diamètre maximal est supérieur à l'écartement des branches 60 parallèles verticales de l'agrafe dans leur position rapprochée et est inférieur à l'écartement des branches 60 parallèles verticales de l'agrafe 38 dans leur position écartée. Cette configuration garantit le bon maintien de la tête 32 par l'agrafe 38 lorsque ses branches 60 occupent leur position rapprochée, et elle garantit aussi la possibilité d'extraire la tête 32 entre les branches 60 de l'agrafe 38 lorsqu'elles occupent leur position écartée.

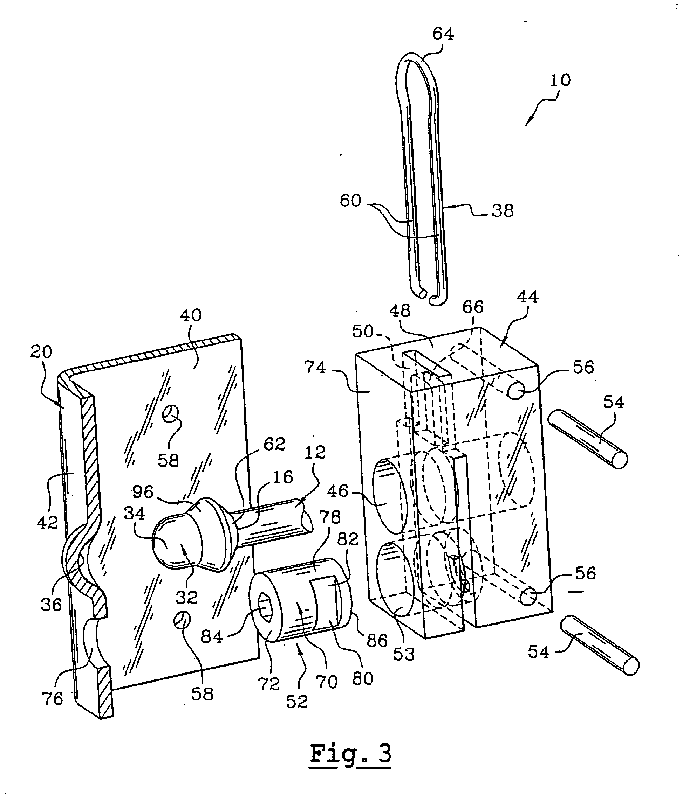

Dans ce premier mode de réalisation de l'invention, comme l'illustrent les figures 2 et 3, les moyens 52 de déverrouillage comportent un barillet 70 cylindrique, qui est monté à rotation dans un second alésage axial 53 constituant la cavité formant, dans ce mode réalisation, les seconds moyens de maintien des moyens de déverrouillage. Le second alésage axial 53 est agencé entre les extrémités libres des branches 60 verticales de l'agrafe 38.

Comme l'illustrent les figures 2 et 3, une première extrémité 72 du barillet 70, comportant des moyens d'entraînement, débouche dans une face avant 74 de la platine 44 en regard d'un perçage 76 pratiqué dans la paroi 42 de jonction de la partie intermédiaire 20 de la barre d'actionnement, et un tronçon 78 intermédiaire, représenté à la figure 6, comporte deux méplats 80 diamétralement opposés dont les faces 82 de fond, qui reçoivent les branches 60 verticales de l'agrafe, sont distantes l'une de l'autre d'une distance "d" correspondant à l'écartement des branches 60 parallèles verticales de l'agrafe 38 dans leur position rapprochée, pour que la rotation du barillet 70 détermine une position écartée des branches 60 verticales selon laquelle elles sont distantes du diamètre "D" de la périphérie du barillet 70.

Bien entendu, les moyens d'entraînement pourraient déboucher dans une face arrière de la platine 44 sans changer la nature de l'invention.

Comme l'illustrent les figures 2 et 3, pour manoeuvrer le barillet 70, les moyens d'entraînement de la première extrémité 72 du barillet 70 comportent une empreinte 84 femelle. Cette empreinte 84 est par exemple constituée, à titre d'exemple et de manière non limitative de l'invention, d'une empreinte 84 à six pans creux.

Avantageusement, comme l'illustrent les figures 4 à 7, une seconde extrémité 86 opposée du barillet 70 comporte un doigt 88 qui est reçu dans une rainure 90 en arc de cercle formée dans le fond du second alésage 53, dont un premier bord 92 est destiné à former pour le doigt 88 une butée qui correspond à la position angulaire du barillet 70 associée à la position rapprochée des branches 60 parallèles verticales de l'agrafe 38, et dont un second bord 94 est destiné à former pour le doigt une butée qui correspond à la position angulaire du barillet 70 associée à la position écartée des branches 60 verticales de l'agrafe 38.

La rotation du barillet 70 entre ses deux positions angulaires extrêmes permet donc le verrouillage ou le déverrouillage de la tête 32 de la tige 12 de commande. On remarquera que le barillet 70 est rappelé dans sa position d'équilibre stable, correspondant à la réception des branches 60 de l'agrafe 38 dans les méplats 80, par ces même branches 60 de l'agrafe 38 qui sont rappelées élastiquement par la branche de jonction 64.

Toutefois, le verrouillage de la tête 32 de la tige 12 de commande peut être effectué sans intervenir sur le barillet 70. En effet, la tête 32 de la tige 12 comporte avantageusement une portion 96 de jonction sensiblement tronconique qui est interposée axialement entre sa portée 34 sphérique et sa portée 62 de rétention, pour permettre l'introduction de l'extrémité de la tige 12 de commande au travers de l'agrafe 38 sans actionner le barillet 70. C'est alors l'introduction de la tête 32 qui écarte les branches 60 de l'agrafe 38. Dans cette configuration optionnelle, les branches 60 de l'agrafe 38 doivent être prévues avec une raideur élevée pour permettre l'introduction de la tête 32 sous un effort élevé d'environ 200 N et pour éviter que, conformément à certaines législations, ladite tête ne soit arrachée de l'agrafe 38 en cas de choc violent.

On remarquera enfin que l'alésage 46 de la platine 44, qui reçoit la tige 12 de commande, est d'un diamètre correspondant sensiblement au diamètre maximal de la portée 62 de rétention de la tige de commande, ceci afin de limiter les possibilités d'introduction de corps étrangers dans le logement 50.

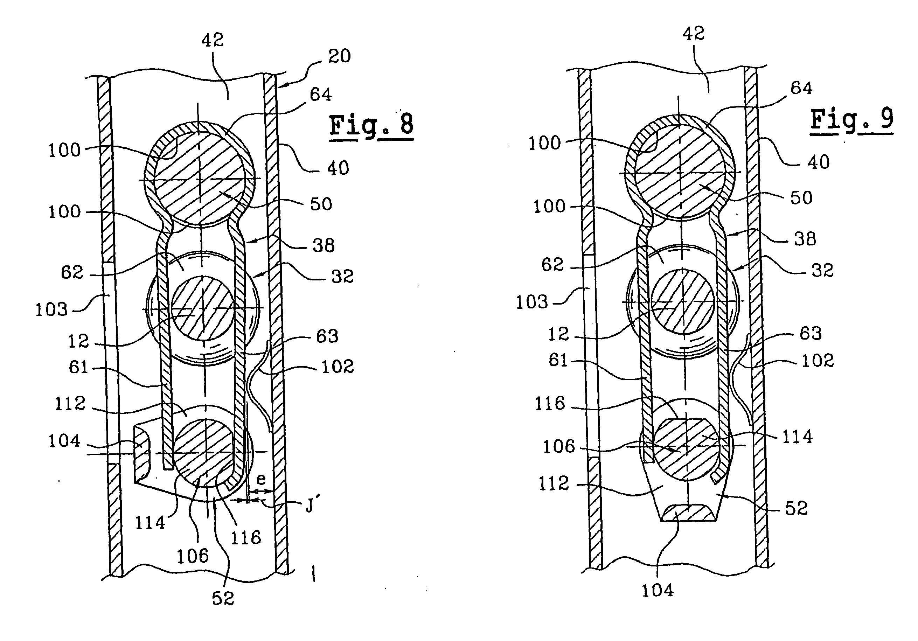

Selon un second mode de réalisation en variante de l'invention qui a été représenté aux figures 8 à 11, l'agencement 10 comporte un pion 50 cylindrique, formant les premiers moyens de maintien de l'agrafe, qui s'étend entre les ailes 40 à partir de la paroi 42 de jonction de la partie 20 intermédiaire de la barre 22 d'actionnement. Le pion 50 est par exemple fixé par une vis (non représentée) qui traverse la paroi 42 de jonction de la partie intermédiaire 20 de la barre 22 d'actionnement et qui est reçue dans le pion 50.

Une branche arrondie 64 transversale supérieure élastique de jonction d'une agrafe 38 en épingle à cheveux est destinée à s'emboîter dans une gorge 100 du pion cylindrique 50 pour déterminer la position axiale de ladite agrafe 38. Les branches verticales 61, 63 de l'agrafe 38, sensiblement parallèles, sont destinées à chevaucher la tige 12 et à immobiliser axialement sa tête 32 contre un bossage 36 analogue à celui décrit dans le premier mode de réalisation.

Avantageusement, la branche arrondie 64 transversale supérieure élastique de jonction de l'agrafe 38 s'étend angulairement sur plus de 180 degrés dans la gorge 100 du pion 50 cylindrique, pour déterminer la position verticale de l'agrafe 38, les zones de jonction recourbées des branches 61 et 63 avec la branche 64 immobilisant verticalement l'agrafe 38.

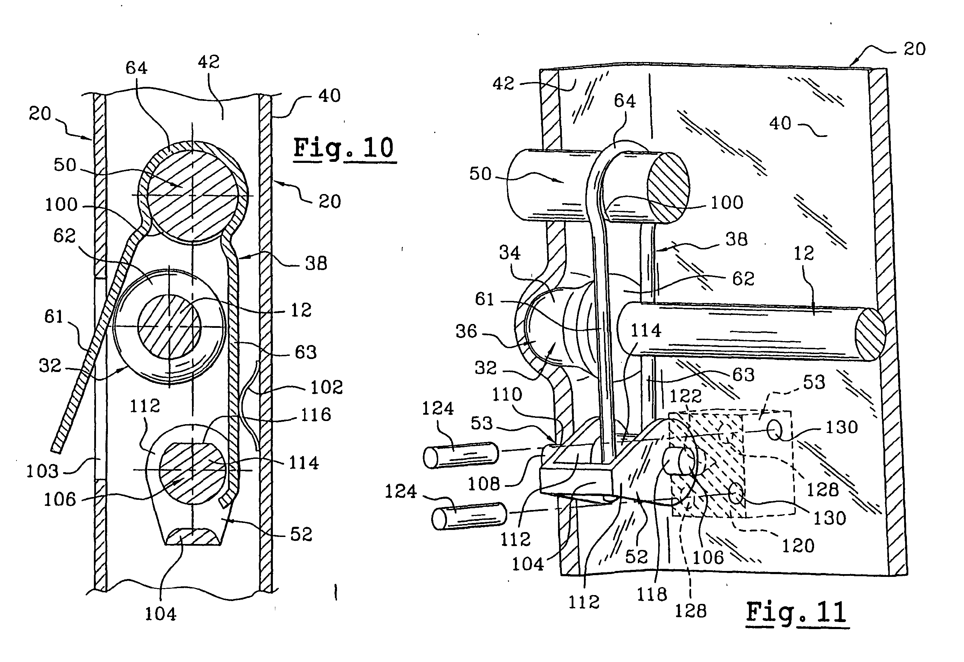

Dans cette configuration, les branches verticales 61, 63 sensiblement parallèles de l'agrafe 38 peuvent être écartées d'une manière sensiblement analogue à celle qui a été décrite en référence au premier mode de réalisation de l'invention, à cette différence près que les branches 61, 63 sont mobiles entre :
- une position verrouillée, représentée à la figure 8, dans laquelle elles sont rappelées élastiquement l'une vers l'autre, une première branche 61 étant immobilisée par les moyens 52 de déverrouillage et la seconde branche 63 étant immobilisée transversalement, notamment contre un bossage 102 de l'aile 40 voisine, dans laquelle elles sont parallèles et prennent axialement appui sur une portée 62 de rétention de la tête 32 de la tige 12 qui est opposée à sa portée 34 sphérique de manière à immobiliser la tête 32 contre le bossage 36, et
- une position déverrouillée, représentée à la figure 9, dans laquelle la première branche verticale 61 est déverrouillée par les moyens 52 de déverrouillage, puis peut être temporairement sollicitée élastiquement par la tige 12, après son retrait du bossage 46, en écartement transversal de l'autre branche 63, comme représenté à la figure 10, pour libérer la tête 32 et permettre le retrait de la tige 12 hors de la partie intermédiaire 20 de la barre d'actionnement 22, la seconde branche 63 demeurant immobilisée.

Comme on peut le voir, dans ce second mode de réalisation, le fonctionnement de l'agencement 10 est relativement semblable à celui décrit précédemment en référence aux figures 2 à 7, à cette différence que, d'une part, une seule branche 61 est déverrouillée par les moyens 52 de déverrouillage et que d'autre part, l'écartement de cette branche n'est pas provoqué par les moyens 52 de déverrouillage mais par un déplacement transversal de la tige 12 d'actionnement du servomoteur, intervenant après son retrait axial du bossage 36.

Avantageusement, pour limiter l'encombrement transversal de la partie intermédiaire 22 de la barre 20 d'actionnement tout en permettant un écartement suffisant de la branche 61 permettant le dégagement de la tête 32 de la tige 12, l'aile 40 de la partie intermédiaire 22 qui est voisine de la première branche de l'agrafe comporte une fente verticale 103 destinée à permettre le passage de la première branche hors de la partie intermédiaire de la barre d'actionnement lorsque ladite première branche est écartée par la tige 12.

Dans ce second mode de réalisation de l'invention, les moyens 52 de déverrouillage comportent un pêne 104, qui est monté à rotation autour d'un axe 106 dont une première extrémité 108 comportant des moyens d'entraînement débouche dans la paroi 42 de jonction par l'intermédiaire d'un perçage 110 formant une partie des seconds moyens 53 de maintien, comme représenté à la figure 11. Ce pêne 104 est mobile entre une position de blocage, représentée à la figure 8, dans laquelle il fait obstacle à l'écartement transversal de la première branche 61 de l'agrafe 38 en épingle à cheveux, et une position escamotée, représentée aux figures 9 et 10, dans laquelle il ne fait pas obstacle à l'écartement transversal de la première branche 61 de l'agrafe 38 et dans laquelle la première branche 61 de l'agrafe 38 en épingle à cheveux peut être sollicitée en écartement par la tige 12 comme représenté plus particulièrement à la figure 10.

On remarquera que les moyens d'entraînement pourraient évidemment être portés par l'autre extrémité de l'axe 106.

Ainsi, à partir de la position de la figure 8 correspondant à la position de blocage du pêne 104 et de verrouillage de la branche 61, la libération de la tige 12 s'opère successivement en pivotant le pêne 104 vers sa position escamotée de la figure 9, en tirant la tige 12 pour extraire sa tête 32 du bossage 36, puis en écartant la branche 61 de l'agrafe en la sollicitant transversalement à l'aide de la tige 12.

Avantageusement, comme l'illustre la figure 11, l'axe 106 de rotation du pêne 104 est agencé entre les branches verticales 61, 63 de l'agrafe 38.

Par ailleurs, le pêne 104 s'étend parallèlement à la direction axiale entre deux flasques 112 transversaux qui sont solidaires de l'axe 106, pour qu'il forme un jeu déterminé avec l'axe 106. De cette manière, dans la position de blocage du pêne 104, la première branche 61 est immobilisée transversalement entre un tronçon intermédiaire 114 de l'axe 106 agencé entre les flasques 112 et le pêne 104 comme représenté à la figure 8, et dans sa position escamotée, le pêne 104 est pivoté sous la première branche 61 pour en permettre l'écartement, comme représenté aux figures 9 et 10.

De préférence, comme l'illustre la figure 8, dans ce second mode de réalisation de l'invention, le bossage 102 de l'aile 40 qui est voisine de la seconde branche 63 de l'agrafe 38 fait saillie à l'intérieur de la partie intermédiaire 20 de la barre 22 d'actionnement suivant un encombrement transversal "e" déterminé destiné à permettre l'immobilisation transversale avec un jeu " J' " transversal déterminé de ladite seconde branche 63 dans la position de blocage du pêne 104 associée à la position verrouillée de l'agrafe 38. Selon les jeux internes de l'agencement 10 et en fonction de l'élasticité de la branche 63 de l'agrafe 38, on pourra prévoir l'immobilisation de la branche 63 avec un jeu " J' " plus ou moins réduit.

Par ailleurs, comme l'illustrent les figures 8 à 10, l'axe 106 de rotation du pêne 104 comporte, sur son tronçon intermédiaire 114 d'un diamètre déterminé, un méplat 116, qui est agencé à l'opposé du pêne 104, pour immobiliser sans jeu la seconde branche 63 contre le bossage 102 lorsque le pêne 104 occupe sa position escamotée des figures 9 et 10 et faciliter ainsi l'écartement de la première branche 61 de l'agrafe 38 comme représenté à la figure 10.

De préférence, pour assurer une meilleure du pêne 104, une seconde extrémité 118 de l'axe 106 du pêne 104 est montée à rotation dans une entretoise 120 formant l'autre partie des seconds moyens 53 de maintien, comme représenté à la figure 11. L'extrémité 118 est par exemple reçue dans un perçage 122 de l'entretoise 120. L'entretoise 120 a été représentée en pointillés sur la figure 11.

L'entretoise 120 est par exemple fixée entre les ailes 40 de la partie 20 intermédiaire de la barre 22 d'actionnement par l'intermédiaire d'au moins deux goupilles élastiques 124 qui traversent des perçages 128 de l'entretoise et des perçages 130 des ailes 40 de la partie 20 intermédiaire de la barre 22 d'actionnement.

D'une manière analogue au premier mode de réalisation de l'invention, les moyens d'entraînement de la première extrémité 108 de l'axe 106 du pêne 104 comportent une empreinte femelle (non représentée), notamment une empreinte à six pans creux.

Il sera aussi compris que, d'une manière analogue au premier mode de réalisation de l'invention, la portée 62 de rétention de la tête 32 de la tige 12 de commande est conformée sous la forme d'un tronc de sphère dont un diamètre minimal arrière correspond au diamètre de la tige 12 de commande, et dont un diamètre maximal est supérieur à l'écartement des branches 61, 63 parallèles verticales de l'agrafe 38 dans leur position verrouillée de la figure 8 et est inférieur à l'écartement des branches 61, 63 parallèles verticales de l'agrafe 38 dans leur position déverrouillée et lorsque la première branche 61 est écartée transversalement par la tige 12 d'actionnement du servomoteur, comme représenté à la figure 10.

L'invention permet donc de réaliser à volonté l'accouplement et le désaccouplement d'une tige 12 de commande d'un servomoteur à une barre 22 d'actionnement d'un pédale de frein d'un véhicule.

## Revendications

1. Agencement (10) pour l'accouplement démontable d'une tige (12) d'orientation axiale de commande d'un servomoteur d'assistance de freinage de véhicule automobile à une pédale (14) de frein du véhicule, du type dans lequel une extrémité (16) de la tige (12) axiale de commande est accouplée au moins en rotation d'axe transversal à une partie intermédiaire (20) d'une barre (22) d'actionnement sensiblement verticale, dont une extrémité (24) est articulée autour d'un axe sensiblement horizontal par rapport à un élément (28) de structure de caisse du véhicule, et dont l'autre extrémité (30) porte la pédale (14) de frein, du type dans lequel l'extrémité (16) de la tige de commande comporte une tête (32) dont au moins une portée (34) sphérique est reçue dans un bossage (36) complémentaire formé dans une paroi de la partie (20) intermédiaire de la barre (22) d'actionnement,
**caractérisé en ce que** la tête (32) est maintenue au contact dudit bossage (36) par l'intermédiaire de moyens (38) élastiquement déformables de rétention axiale qui sont interposés entre la partie (20) intermédiaire de la barre d'actionnement et la tige (12) de commande, et dont la déformation est commandée par des moyens (52) de déverrouillage accessibles depuis l'extérieur de la partie (20) intermédiaire de la barre (22) d'actionnement, pour former une liaison de type rotule démontable à volonté.

2. Agencement (10) selon la revendication précédente, **caractérisé en ce que** la partie (20) intermédiaire de la barre d'actionnement est conformée sous la forme d'un profilé en U d'orientation sensiblement verticale qui comporte :
- deux ailes (40) entre lesquelles est reçue la tige (12) de commande et entre lesquelles sont agencés les moyens (38) élastiquement déformables de rétention axiale et les moyens (52) de déverrouillage, et
- une paroi (42) de jonction, agencée transversalement entre les deux ailes (40), dans laquelle est formé le bossage (36) recevant la portée sphérique (34) de la tête (32) de la tige (12) de commande.

3. Agencement (10) selon la revendication précédente, **caractérisé en ce que** la partie (20) intermédiaire de la barre (22) d'actionnement reçoit entre ses ailes :
- des premiers moyens (50) de maintien, destinés à immobiliser au droit de la base de la tête (32) de la tige (12) une agrafe (38) élastique qui forme les moyens élastiquement déformables de rétention axiale destinés à immobiliser axialement la tête (32) de la tige (12) contre le bossage (36), et qui est susceptible d'être déformée élastiquement par les moyens de déverrouillage pour libérer la tête (32),
- des seconds moyens (53) de maintien des moyens (52) de déverrouillage.

4. Agencement (10) selon la revendication précédente, **caractérisé en ce qu'**il comporte une platine (44) comportant les premier et second moyens de maintien, qui est reçue entre les ailes (40) de la partie (20) intermédiaire de la barre (22) d'actionnement, dont un premier alésage (46) est traversé avec jeu (J) par la tige (12) pour permettre l'articulation de ladite tige (12), et qui comporte :
- un logement (50) vertical qui débouche dans la partie supérieure (48) de la platine (44), qui coupe le premier alésage (46) sensiblement au droit de la base de la tête (32) de la tige (12), et qui forme les premiers moyens de maintien de l'agrafe (38) élastique verticale formant les moyens de rétention axiale,
- une cavité (53), qui débouche dans le logement vertical (50) en regard de l'agrafe (38) et dans une face (74) de la platine (44) en regard d'une ouverture (76) de la partie intermédiaire (20) de la barre d'actionnement, et qui forme les seconds moyens de maintien des moyens (52) de déverrouillage destinés à déformer élastiquement l'agrafe.

5. Agencement (10) selon la revendication précédente, **caractérisé en ce que** la platine (44) est fixée entre les ailes (40) de la partie (20) intermédiaire de la barre (22) d'actionnement par l'intermédiaire d'au moins deux goupilles élastiques (54) qui traversent des perçages (56) de la platine et des perçages (58) des ailes (40) de la partie (20) intermédiaire de la barre (22) d'actionnement.

6. Agencement selon l'une des revendications 3 à 5, **caractérisé en ce que** l'agrafe (38) est une agrafe en épingle à cheveux qui est destinée à chevaucher la tige de commande et dont les branches verticales (60) sensiblement parallèles sont mobiles entre :
- une position rapprochée, vers laquelle elles sont rappelées élastiquement, dans laquelle elles sont parallèles et prennent axialement appui sur une portée (62) de rétention de la tête (32) de la tige (12) qui est opposée à sa portée (34) sphérique de manière à immobiliser la tête (32) contre le bossage (36), et
- une position écartée, dans laquelle elles peuvent être temporairement sollicitées élastiquement en écartement l'une de l'autre par les moyens (52) de déverrouillage suivant la direction transversale, pour libérer la tête (32) et permettre le retrait de la tige (12) hors de la platine (44).

7. Agencement (10) selon la revendication précédente, **caractérisé en ce que** l'alésage (46) de la platine (44), qui reçoit la tige (12) de commande, est d'un diamètre correspondant sensiblement au diamètre maximal de la portée (62) de rétention de la tige (12) de commande.

8. Agencement (10) selon l'une des revendications 6 ou 7 prise en combinaison avec la revendication 4, **caractérisé en ce que** l'agrafe (38) en épingle à cheveux comporte une branche (64) transversale supérieure élastique de jonction qui réunit les branches (60) verticales parallèles et qui repose sur une paroi (66) de la platine, qui s'étend parallèlement à la direction axiale entre les bords axiaux (68) du logement (50) formant les premiers moyens de maintien, et qui s'étend transversalement entre les branches (60) verticales de l'agrafe (38) pour déterminer la position verticale de l'agrafe (38).

9. Agencement (10) selon la revendication précédente, **caractérisé en ce que** les moyens (52) de déverrouillage comportent un barillet (70) cylindrique, qui est monté à rotation dans un second alésage (53) axial constituant la cavité de la platine (44) formant les seconds moyens de maintien, qui est agencé entre les extrémités libres des branches (60) verticales de l'agrafe (38), dont une première extrémité (72) comportant des moyens d'entraînement débouche dans une face avant (74) de la platine en regard d'un perçage (76) pratiqué dans la paroi (42) de jonction de la partie intermédiaire (20) de la barre (22) d'actionnement, et dont un tronçon (78) intermédiaire comporte deux méplats (80) diamétralement opposés dont les faces (82) de fond, qui reçoivent les branches (60) verticales de l'agrafe (38), sont distantes l'une de l'autre d'une distance (d) correspondant à l'écartement des branches parallèles (60) verticales de l'agrafe dans leur position rapprochée, pour que la rotation du barillet (70) détermine une position écartée des branches verticales (60) selon laquelle elles sont distantes du diamètre (D) de la périphérie du barillet (70).

10. Agencement (10) selon la revendication précédente, **caractérisé en ce qu'**une seconde extrémité (86) opposée du barillet (70) comporte un doigt (88) qui est reçu dans une rainure (90) en arc de cercle formée dans le fond du second alésage (53), dont un premier bord (92) est destiné à former pour le doigt (88) une butée qui correspond à la position angulaire du barillet (70) associée à la position rapprochée des branches (60) parallèles verticales de l'agrafe (38), et dont un second bord (94) est destiné à former pour le doigt (88) une butée qui correspond à la position angulaire du barillet (70) associée à la position écartée des branches (60) verticales de l'agrafe (38).

11. Agencement (10) selon l'une des revendications 9 ou 10, **caractérisé en ce que** les moyens d'entraînement de la première extrémité (72) du barillet (70) comportent une empreinte (84) femelle, notamment une empreinte à six pans creux.

12. Agencement (10) selon l'une quelconque des revendications 6 à 11, **caractérisé en ce que** la portée (62) de rétention de la tête (32) de la tige (12) de commande est conformée sous la forme d'un tronc de sphère :
- dont un diamètre minimal arrière correspond au diamètre de la tige (12) de commande, et
- dont un diamètre maximal est supérieur à l'écartement des branches (60) parallèles verticales de l'agrafe dans leur position rapprochée et est inférieur à l'écartement des branches (60) parallèles verticales de l'agrafe (38) dans leur position écartée.

13. Agencement (10) selon la revendication précédente, **caractérisé en ce que** la tête (32) de la tige de commande comporte une portion (96) de jonction sensiblement tronconique qui est interposée axialement entre sa portée (34) sphérique et sa portée (62) de rétention, pour permettre l'introduction de l'extrémité de la tige (12) de commande au travers de l'agrafe (38) sans actionner le barillet (70).

14. Agencement (10) selon la revendication 3, **caractérisé en ce qu'**il comporte un pion (50) cylindrique, formant les premiers moyens de maintien de l'agrafe, qui s'étend entre les ailes (40) à partir de la paroi (42) de jonction de la partie intermédiaire (20) de la barre d'actionnement (22) et dans une gorge (100) duquel est destinée à s'emboîter une branche arrondie (64) transversale supérieure élastique de jonction d'une agrafe (38) en épingle à cheveux dont les branches verticales (61, 63) sensiblement parallèles sont destinées à chevaucher la tige (12) et à immobiliser axialement sa tête (32) contre le bossage (36).

15. Agencement (10) selon la revendication précédente, **caractérisé en ce que** la branche arrondie (64) transversale supérieure élastique de jonction de l'agrafe (38) s'étend sur plus de 180 degrés dans la gorge (100) du pion cylindrique (50), pour déterminer la position verticale de l'agrafe (38).

16. Agencement (10) selon l'une des revendications 14 ou 15, **caractérisé en ce que** les branches verticales (61, 63) sensiblement parallèles de l'agrafe (38) sont mobiles entre :
- une position verrouillée, dans laquelle elles sont rappelées élastiquement l'une vers l'autre, une première branche (61) étant immobilisée par les moyens (52) de déverrouillage et la seconde branche (63) étant immobilisée transversalement, notamment contre un bossage (102) de l'aile (40) voisine, dans laquelle elles sont parallèles et prennent axialement appui sur une portée (62) de rétention de la tête (32) de la tige (12) qui est opposée à sa portée (34) sphérique de manière à immobiliser la tête (32) contre le bossage (36), et
- une position déverrouillée, dans laquelle la première branche verticale (61) est déverrouillée par les moyens (52) de déverrouillage puis peut être temporairement sollicitée élastiquement par la tige (12) en écartement transversal de l'autre branche (63), pour libérer la tête (32) et permettre le retrait de la tige (12) hors de la partie intermédiaire (20) de la barre (22) d'actionnement, la seconde branche (63) demeurant immobilisée.

17. Agencement (10) selon la revendication précédente, **caractérisé en ce que** l'aile (40) de la partie (20) intermédiaire de la barre (22) d'actionnement qui est voisine de la première branche (61) de l'agrafe (38) comporte une fente (103) verticale destinée à permettre le passage de la première branche (61) hors de la partie (20) intermédiaire de la barre (22) d'actionnement lorsque ladite première branche (61) est écartée par la tige (12).

18. Agencement (10) selon l'une des revendications 16 ou 17, **caractérisé en ce que** les moyens (52) de déverrouillage comportent un pêne (104), qui est monté à rotation autour d'un axe (106) dont une première extrémité (108) comportant des moyens d'entraînement débouche dans la paroi (42) de jonction par l'intermédiaire d'un perçage (110) formant une partie des seconds moyens (53) de maintien, et qui est mobile entre une position de blocage dans laquelle il fait obstacle à l'écartement transversal de la première branche (61) de l'agrafe (38) en épingle à cheveux et une position escamotée il ne fait pas obstacle à l'écartement transversal de la première branche (61) de l'agrafe (38) et dans laquelle la première branche (61) de l'agrafe en épingle à cheveux peut être sollicitée en écartement par la tige (12).

19. Agencement (10) selon la revendication précédente, **caractérisé en ce que** l'axe (106) de rotation du pêne (104) est agencé entre les branches verticales (61, 63) de l'agrafe (38) et **en ce que** le pêne (104) s'étend parallèlement à la direction axiale entre deux flasques transversaux (112) solidaires de l'axe (106), de manière qu'en position de blocage la première branche (61) soit immobilisée transversalement entre un tronçon intermédiaire (114) de l'axe (106) agencé entre les flasques (112) et le pêne (104), et de manière qu'en position escamotée le pêne (104) soit pivoté sous la première branche (61) pour en permettre l'écartement.

20. Agencement (10) selon la revendication précédente prise en combinaison avec la revendication 16, **caractérisé en ce que** le bossage (102) de l'aile (40) qui est voisine de la seconde branche (63) de l'agrafe (38) fait saillie à l'intérieur de la partie intermédiaire (20) de la barre (22) d'actionnement suivant un encombrement transversal (e) destiné à permettre l'immobilisation transversale avec un jeu (J') de la seconde branche (63) en position verrouillée de l'agrafe (38) associée à la position de blocage du pêne (104).

21. Agencement (10) selon la revendication précédente, **caractérisé en ce que** l'axe (106) de rotation du pêne (104) comporte, sur son tronçon intermédiaire (114), un méplat (116) qui est agencé à l'opposé du pêne (104) pour immobiliser sans jeu la seconde branche (63) contre le bossage (102) lorsque le pêne (104) occupe sa position escamotée, et pour faciliter ainsi l'écartement de la première branche (61) de l'agrafe (38).

22. Agencement (10) selon l'une des revendications 18 à 21, **caractérisé en ce qu'**une seconde extrémité (118) de l'axe (106) du pêne est montée à rotation dans une entretoise (120), formant l'autre partie des seconds moyens (53) de maintien, qui est fixée entre les ailes (40) de la partie (20) intermédiaire de la barre (22) d'actionnement par l'intermédiaire d'au moins deux goupilles élastiques (124) qui traversent des perçages (128) de l'entretoise (120) et des perçages (130) des ailes (40) de la partie (20) intermédiaire de la barre (22) d'actionnement.

23. Agencement (10) selon l'une des revendications 18 à 22, **caractérisé en ce que** les moyens d'entraînement de la première extrémité (108) de l'axe (106) du pêne (104) comportent une empreinte femelle, notamment une empreinte à six pans creux.

24. Agencement (10) selon l'une quelconque des revendications 14 à 23, **caractérisé en ce que** la portée (62) de rétention de la tête (32) de la tige (12) de commande est conformée sous la forme d'un tronc de sphère :
- dont un diamètre minimal arrière correspond au diamètre de la tige (12) de commande, et
- dont un diamètre maximal est supérieur à l'écartement des branches (61, 63) parallèles verticales de l'agrafe (38) dans leur position verrouillée et est inférieur à l'écartement des branches (61, 63) parallèles verticales de l'agrafe (38) lorsqu'elles occupent leur position déverrouillée et que la première branche (61) est écartée transversalement par la tige (12) d'actionnement du servomoteur.

## Claims

1. Arrangement (10) for disconnectably coupling an axially orientated motor vehicle brake booster control rod (12) to a brake pedal (14) of the vehicle, of the type in which one end (16) of the axial control rod (12) is coupled at least in terms of rotation about a transverse axis to an intermediate part (20) of a roughly vertical actuating bar (22), one end (24) of which is articulated about a roughly horizontal axis with respect to a vehicle body structural element (28), and the other end (30) of which bears the brake pedal (14), of the type in which the end (16) of the control rod comprises a head (32) at least one spherical bearing surface (34) of which is housed in a complementary boss (36) formed in a wall of the intermediate part (20) of the actuating bar (22),
**characterized in that** the head (32) is kept in contact with said boss (36) via elastically deformable axial retention means (38) interposed between the intermediate part (20) of the actuating bar and the control rod (12), and the deformation of which is controlled by unlocking means (52) accessible from outside the intermediate part (20) of the actuating bar (22), so as to form a connection of the ball joint type that can be disconnected at will.

2. Arrangement (10) according to the preceding claim, **characterized in that** the intermediate part (20) of the actuating bar is shaped as a U-section orientated roughly vertically and comprising:
- two flanges (40) between which the control rod (12) is housed and between which the elastically deformable axial retention means (38) and the unlocking means (52) are arranged, and
- a connecting wall (42) arranged transversely between the two flanges (40), in which wall the boss (36) housing the spherical bearing surface (34) of the head (32) of the control rod (12) is formed.

3. Arrangement (10) according to the preceding claim, **characterized in that** the intermediate part (20) of the actuating bar (22) houses, between its flanges:
- first holding means (50) intended to immobilize, in line with the base of the head (32) of the rod (12), an elastic clip (38) which forms the elastically deformable axial retention means intended to axially immobilize the head (32) of the rod (12) against the boss (36) and which can be deformed elastically by the unlocking means to release the head (32),
- second holding means (53) for holding the unlocking means (52).

4. Arrangement (10) according to the preceding claim, **characterized in that** it comprises a mounting plate (44) comprising the first and second holding means, which plate is housed between the flanges (40) of the intermediate part (20) of the actuating bar (22), a first bore (46) of which has the rod (12) passing through it with clearance (J) to allow said rod (12) to be articulated, and which comprises:
- a vertical housing (50) opening into the upper part (48) of the mounting plate (44), which intersects the first bore (46) roughly in line with the base of the head (32) of the rod (12) and which forms the first holding means for holding the vertical elastic clip (38) that forms the axial retention means,
- a cavity (53) opening into the vertical housing (50) facing the clip (38) and into a face (74) of the mounting plate (44) facing an opening (76) of the intermediate part (20) of the actuating bar, and which forms the second holding means holding the unlocking means (52) intended to elastically deform the clip.

5. Arrangement (10) according to the preceding claim, **characterized in that** the mounting plate (44) is fixed between the flanges (40) of the intermediate part (20) of the actuating bar (22) by at least two elastic pins (54) passing through drillings (56) in the mounting plate and drillings (58) in the flanges (40) of the intermediate part (20) of the actuating bar (22).

6. Arrangement according to one of Claims 3 to 5, **characterized in that** the clip (38) is a hairpin clip intended to straddle the control rod and the roughly parallel vertical branches (60) of which can move between:
- a close-together position, towards which they are elastically returned, in which they are parallel and bear axially against a retention bearing surface (62) of the head (32) of the rod (12) which is opposite its spherical bearing surface (34) so as to immobilize the head (32) against the boss (36), and
- a parted position in which they can be temporarily elastically urged apart by unlocking means (52) in the transverse direction, so as to release the head (32) and allow the rod (12) to be withdrawn from the mounting plate (44).

7. Arrangement (10) according to the preceding claim, **characterized in that** the bore (46) in the mounting plate (44) which accommodates the control rod (12) is of a diameter roughly corresponding to the maximum diameter of the retention bearing surface (62) of the control rod (12).

8. Arrangement (10) according to one of Claims 6 and 7 taken in combination with Claim 4, **characterized in that** the hairpin clip (38) comprises an elastic upper transverse connecting branch (64) connecting the parallel vertical branches (60) and resting on a wall (66) of the mounting plate, which runs parallel to the axial direction between the axial edges (68) of the housing (50) forming the first holding means and which runs transversely between the vertical branches (60) of the clip (38) to determine the vertical position of the clip (38).

9. Arrangement (10) according to the preceding claim, **characterized in that** the unlocking means (52) comprise a cylindrical barrel (70) mounted so that it can rotate in an axial second bore (53) constituting the cavity in the mounting plate (44) forming the second holding means, which is arranged between the free ends of the vertical branches (60) of the clip (38), of which a first end (72) comprising drive means opens into a front face (74) of the mounting plate opposite a drilling (76) made in the connecting wall (42) of the intermediate part (20) of the actuating bar (22), and of which an intermediate portion (78) comprises two diametrically opposed flats (80) of which the end faces (82), accommodating the vertical branches (60) of the clip (38) are distant from one another by a distance (d) corresponding to the separation of the vertical parallel branches (60) of the clip in their close-together position, so that rotation of the barrel (70) determines a parted position of the vertical branches (60) in which they are distant by the diameter (D) of the periphery of the barrel (70).

10. Arrangement (10) according to the preceding claim, **characterized in that** an opposite second end (86) of the barrel (70) comprises a finger (88) housed in a groove (90) in the shape of an arc of a circle formed in the end of the second bore (53), a first edge (92) of which is intended to form, for the finger (88), a stop that corresponds to the angular position of the barrel (70) associated with the close-together position of the vertical parallel branches (60) of the clip (38), and a second edge (94) of which is intended to form, for the finger (88), a stop which corresponds to the angular position of the barrel (70) associated with the parted position of the vertical branches (60) of the clip (38).

11. Arrangement (10) according to one of Claims 9 and 10, **characterized in that** the drive means at the first end (72) of the barrel (70) comprise a socket (84), particularly a hexagon socket.

12. Arrangement (10) according to any one of Claims 6 to 11, **characterized in that** the retention bearing surface (62) for retaining the head (32) of the control rod (12) is shaped in the form of a portion of a sphere:
- a rear minimum diameter of which corresponds to the diameter of the control rod (12), and
- a maximum diameter of which is greater than the separation of the vertical parallel branches (60) of the clip in their close-together position and smaller than the separation of the vertical parallel branches (60) of the clip (38) in their parted position.

13. Arrangement (10) according to the preceding claim, **characterized in that** the head (32) of the control rod has a roughly frustaconical connecting portion (96) inserted axially between its spherical bearing surface (34) and its retention bearing surface (62) to allow the end of the control rod (12) to be introduced through the clip (38) without actuating the barrel (70).

14. Arrangement (10) according to Claim 3, **characterized in that** it comprises a cylindrical peg (50) forming the first holding means for holding the clip, which extends between the flanges (40) from the connecting wall (42) of the intermediate part (20) of the actuating bar (22) and into a groove (100) of which a rounded elastic upper transverse connecting branch (64) of a hairpin clip (38) is intended to fit, the roughly parallel vertical branches (61, 63) of which clip are intended to straddle the rod (12) and axially immobilize its head (32) against the boss (36).

15. Arrangement (10) according to the preceding claim, **characterized in that** the rounded elastic upper transverse connecting branch (64) of the clip (38) extends over more than 180 degrees in the groove (100) of the cylindrical peg (50) to determine the vertical position of the clip (38).

16. Arrangement (10) according to one of Claims 14 and 15, **characterized in that** the roughly parallel vertical branches (61, 63) of the clip (38) can move between:
- a locked position in which they are elastically returned toward one another, a first branch (61) being immobilized by the unlocking means (52) and the second branch (63) being immobilized transversely, particularly against a boss (102) of the adjacent flange (40), in which position they are parallel and bear axially against a retention axial bearing surface (62) for retaining the head (32) of the rod (12) which is at the opposite end to its spherical bearing surface (34), so as to immobilize the head (32) against the boss (36), and
- an unlocked position in which the first vertical branch (61) is unlocked by the unlocking means (52) then can be elastically urged temporarily by the rod (12) transversely away from the other branch (63) to release the head (32) and allow the rod (12) to be withdrawn from the intermediate part (20) of the actuating bar (22), the second branch (63) remaining immobilized.

17. Arrangement (10) according to the preceding claim, **characterized in that** the flange (40) of the intermediate part (20) of the actuating bar (22) adjacent to the first branch (61) of the clip (38) has a vertical slot (103) intended to allow the first branch (61) to pass out of the intermediate part (20) of the actuating bar (22) when the said first branch (61) is moved away by the rod (12).

18. Arrangement (10) according to one of Claims 16 and 17, **characterized in that** the unlocking means (52) comprise a latch bolt (104) mounted to rotate about an axle (106) of which a first end (108) comprising drive means opens into the connecting wall (42) via a drilling (110) forming part of the second holding means (53), and which can move between a blocking position in which it opposes the transverse parting movement of the first branch (61) of the hairpin clip (38) and a retracted position in which it does not oppose the transverse parting movement of the first branch (61) of the clip (38) and in which the first branch (61) of the hairpin clip can be urged away by the rod (12).

19. Arrangement (10) according to the preceding claim, **characterized in that** the axle (106) about which the latch bolt (104) rotates is arranged between the vertical branches (61, 63) of the clip (38) and **in that** the latch bolt (104) runs parallel to the axial direction between two transverse cheeks (112) secured to the axle (106) so that in the blocking position the first branch (61) is transversely immobilized between an intermediate portion (114) of the axle (106) arranged between the cheeks (112) and the latch bolt (104), and so that in a retracted position the latch bolt (104) is pivoted under the first branch (61) to give it a parting movement.

20. Arrangement (10) according to the preceding claim taken in combination with Claim 16, **characterized in that** the boss (102) of the flange (40) adjacent to the second branch (63) of the clip (38) projects into the interior of the intermediate part (20) of the actuating bar (22) by a transverse distance (e) intended to allow the transverse immobilization with clearance (J') of the second branch (63) when the clip (38) is in a locked position associated with the blocked position of the latch bolt (104).

21. Arrangement (10) according to the preceding claim, **characterized in that** the axle (106) about which the latch bolt (104) rotates comprises, on its intermediate portion (114), a flat (116) arranged opposite the latch bolt (104) to immobilize, without clearance, the second branch (63) against the boss (102) when the latch bolt (104) occupies its retracted position, and thus make it easier to part the first branch (61) of the clip (38).

22. Arrangement (10) according to one of Claims 18 to 21, **characterized in that** a second end (118) of the axle (106) of the latch bolt is mounted so that it can rotate in a spacer (120) forming the other part of the second holding means (53), which is fixed between the flanges (40) of the intermediate part (20) of the actuating bar (22) via at least two elastic pins (124) passing through drillings (128) in the spacer (120) and drillings (130) in the flanges (40) of the intermediate part (20) of the actuating bar (22).

23. Arrangement (10) according to one of Claims 18 to 22, **characterized in that** the drive means at the first end (108) of the axle (106) of the latch bolt (104) comprise a socket, particularly a hexagon socket.

24. Arrangement (10) according to any one of Claims 14 to 23, **characterized in that** the retention bearing surface (62) for retaining the head (32) of the control rod (12) is shaped in the form of a portion of a sphere:
- a rear minimum diameter of which corresponds to the diameter of the control rod (12), and
- a maximum diameter of which is greater than the separation of the vertical parallel branches (61, 63) of the clip (38) in their locked position and less than the separation of the vertical parallel branches (61, 63) of the clip (38) when they occupy their unlocked position and the first branch (61) is transversely moved away by the booster actuating rod (12).

## Patentansprüche

1. Anordnung (10) zum abnehmbaren Kuppeln einer axial gerichteten Steuerstange (12) eines Bremskraftverstärkers eines Kraftfahrzeugs mit einem Fahrzeugbremspedal (14) von dem Typ, bei welchem ein Ende (16) der axialen Betätigungsstange (12) über mindestens eine Querachsendrehung mit einem Zwischenstück (20) einer im Wesentlichen senkrechten Betätigungsstange (22) gekoppelt ist, von welcher ein Ende (24) um eine im Wesentlichen waagerechten Achse bezüglich eines Strukturelements der Karosserie des Fahrzeugs angelenkt ist, und deren anderes Ende (30) das Bremspedal (14) trägt, von dem Typ, bei welchem das Ende (16) der Steuerstange einen Kopf (32) aufweist, von welchem mindestens eine kugelförmige Auflagefläche (34) in einer komplementären Ausbauchung (36) aufgenommen ist, die in einer Wand des Zwischenstücks (20) der Betätigungsstange (22) ausgebildet ist,
**dadurch gekennzeichnet, dass** der Kopf (32) mit der Ausbauchung (36) über elastisch verformbare axiale Rückhaltemittel (38) in Kontakt gehalten ist, die zwischen dem Zwischenstück (20) der Betätigungsstange und der Steuerstange (12) eingebaut ist, und deren Verformung durch Entriegelungsmittel (52) gesteuert ist, die von der Außenseite des Zwischenstücks (20) der Betätigungsstange (22) zugänglich sind, um eine Verbindung vom Typ eines beliebig abnehmbaren Kugelgelenks zu bilden.

2. Anordnung (10) nach dem vorhergehenden Anspruch, **dadurch gekennzeichnet, dass** das Zwischenstück (20) der Betätigungsstange in der Form eines U-Profils mit im Wesentlichen senkrechter Ausrichtung ausgebildet ist, das Folgendes aufweist:
- zwei Flügel (40), zwischen welchen die Steuerstange (12) aufgenommen ist und die elastisch verformbaren axialen Rückhaltemittel und die Entriegelungsmittel angeordnet sind, und
- eine Verbindungswand (42), die quer zwischen den beiden Flügeln (40) angeordnet ist und in welcher die Ausbauchung (36) gebildet ist, die die kugelförmige Auflagefläche (36) des Kopfes (32) der Steuerstange (12) aufnimmt.

3. Anordnung (10) nach dem vorhergehenden Anspruch, **dadurch gekennzeichnet, dass** das Zwischenstück (20) der Betätigungsstange (22) zwischen ihren Flügeln Folgendes aufnimmt:
- erste Haltemittel (50), die dazu dienen, senkrecht zur Basis des Kopfes (32) der Stange (12) eine elastische Klammer (38) zu blockieren, die die elastisch verformbare axiale Rückhaltemittel bildet, die dazu dienen, den Kopf (32) der Stange (12) gegen die Ausbauchung (36) zu blockieren, und die durch den Entriegelungsmittel elastisch verformt werden kann, um den Kopf (32) freizugeben,
- zweite Mittel (53) zum Halten der Entriegelungsmittel (52).

4. Anordnung (10) nach dem vorhergehenden Anspruch, **dadurch gekennzeichnet, dass** sie eine Platte (44) mit den ersten und zweiten Haltemitteln aufweist, die zwischen den Flügeln (40) des Zwischenstücks (20) der Betätigungsstange (22) aufgenommen ist, von welcher eine erste Bohrung (46) durch die Stange (12) mit Spiel (J) durchsetzt ist, um die Schwenkbarkeit der Stange (12) zu ermöglichen, und welche Folgendes aufweist:
- eine senkrechte Aufnahme (50), die in den oberen Teil (48) der Platte (44) mündet, die die erste Bohrung (46) im Wesentlichen senkrecht zur Basis des Kopfes (32) der Stange (12) schneidet und die ersten Mittel zum Halten der senkrechten elastischen Klammer (38) bildet, die die axialen Rückhaltemittel bildet,
- einen Hohlraum (53), der in die senkrechte Aufnahme (50) gegenüber der Klammer (38) und in einer Seite (74) der Aufnahme (44) gegenüber einer Öffnung (76) des Zwischenstücks (20) der Betätigungsstange mündet und die zweiten Mittel zum Halten der Entriegelungsmittel (52) bildet, die dazu dienen, die Klammer elastisch zu verformen.

5. Anordnung (10) nach dem vorhergehenden Anspruch, **dadurch gekennzeichnet, dass** die Platte (44) zwischen den Flügeln (40) des Zwischenstücks (20) der Betätigungsstange (22) durch mindestens zwei elastische Stifte (54) befestigt ist, die durch die Bohrungen (56) der Platte und Bohrungen (58) der Flügel (40) des Zwischenstücks (20) der Betätigungsstange (22) hindurchgehen.

6. Anordnung (10) nach einem der Ansprüche 3 bis 5, **dadurch gekennzeichnet, dass** die Klammer (38) eine haarnadelförmige Klammer ist, die dazu dient, die Steuerstange zu übergreifen und deren im Wesentlichen parallele senkrechte Schenkel (60) zwischen
- einer angenäherten Stellung, zu der sie elastisch zurückgestellt sind und sich axial auf einer Rückhaltefläche (62) des Kopfes (32) der Stange (12) abstützen, die seiner kugelförmigen Auflagefläche (34) entgegengesetzt ist, so dass der Kopf (32) gegen die Ausbauchung (36) blockiert ist, und
- einer gespreizten Stellung, in der sie zeitweise durch die Entriegelungsmittel (52) entlang der Querrichtung elastisch auseinander gespreizt beaufschlagt sein können, um den Kopf (32) freizugeben und das Herausziehen der Stange (12) aus der Platte (44) zu ermöglichen,
beweglich sind.

7. Anordnung (10) nach dem vorhergehenden Anspruch, **dadurch gekennzeichnet, dass** die Bohrung (46) der Platte (44), die die Steuerstange (12) aufnimmt, einen Durchmesser aufweist, der im Wesentlichen dem maximalen Durchmesser der Rückhaltefläche (62) der Steuerstange (12) entspricht.

8. Anordnung (10) nach einem der Ansprüche 6 oder 7 in Kombination mit dem Anspruch 4, **dadurch gekennzeichnet, dass** die haarnadelförmige Klammer (38) einen elastischen oberen Verbindungsquerschenkel (64) aufweist, der die parallelen senkrechten Schenkel (60) verbindet und auf einer Wand (66) der Platte aufliegt, der sich parallel zur axialen Richtung zwischen den axialen Rändern (68) der Aufnahme (50) erstreckt, die die ersten Haltemittel bildet, und der sich quer zwischen senkrechten Schenkel (60) der Klammer (38) erstreckt, um die senkrechte Stellung der Klammer (38) zu bestimmen.

9. Anordnung (10) nach dem vorhergehenden Anspruch, **dadurch gekennzeichnet, dass** die Entriegelungsmittel (52) eine zylindrische Trommel (70) aufweisen, die in einer zweiten axialen Bohrung (53) drehbar gelagert ist, welche den Hohlraum der Platte (44) darstellt, der die zweiten Haltemittel bildet, die zwischen den freien Enden der senkrechten Schenkel (60) der Klammer (38) angeordnet ist, von welchen ein erstes Ende (72) mit Antriebsmitteln in eine vordere Seite (74) der Platte gegenüber einer in der Verbindungswand (42) des Zwischenstücks (20) der Betätigungsstange (22) ausgebildeten Bohrung (76) mündet, und von welchen ein Zwischenabschnitt (78) zwei diametral entgegengesetzte Abflachungen (80) aufweist, deren Bodenseiten (82), die die senkrechten Schenkel (60) der Klammer (38) aufnehmen, in deren angenäherten Stellung um einen Abstand (d) von einander entfernt sind, der dem Abstand zwischen den senkrechten parallelen Schenkeln (60) der Klammer in ihrer angenäherten Stellung entspricht, damit die Drehung der Trommel (70) eine gespreizten Stellung der senkrechten Schenkel (60) bestimmt, bei welcher sie vom Durchmesser (D) des Umfangs der Trommel (70) entfernt sind.

10. Anordnung (10) nach dem vorhergehenden Anspruch, **dadurch gekennzeichnet, dass** ein zweites entgegengesetztes Ende (86) der Trommel (70) einen Finger (88) aufweist, der in einer kreisbogenförmigen Nut (90) aufgenommen ist, welche im Boden der zweiten Bohrung (53) ausgebildet ist, von welcher ein erster Rand (92) dazu dient, für den Finger (88) einen Anschlag zu bilden, der der Winkelstellung der Trommel (70) entspricht, die der angehnäherten Stellung der senkrechten parallelen Schenkel (60) der Klammer (38) zugeordnet ist, und von welcher ein zweiter Rand (94) dazu dient, für den Finger (88) einen Anschlag zu bilden, der der Winkelstellung der Trommel (70) entspricht, die der gespreizten Stellung der senkrechten Schenkel (60) der Klammer (38) zugeordnet ist.

11. Anordnung (10) nach einem der Ansprüche 9 oder 10, **dadurch gekennzeichnet, dass** die Antriebsmittel des ersten Endes (72) der Trommel (70) eine vertiefte Prägung (84), insbesondere eine hohle Innensechskantprägung aufweisen.

12. Anordnung (10) nach einem der Ansprüche 6 bis 11, **dadurch gekennzeichnet, dass** die Rückhaltefläche (62) des Kopfes (32) der Steuerstange (12) in der Form einer kegelstumpfartigen Kugel ausgebildet ist:
- von welcher ein hinterer minimaler Durchmesser dem Durchmesser der Steuerstange (12) entspricht, und
- von welcher ein maximaler Durchmesser größer als die Distanz zwischen den senkrechten parallelen Schenkeln (60) der Klammer in ihrer angenäherten Stellung und kleiner als die Distanz zwischen den senkrechten parallelen Schenkeln (60) der Klammer in ihrer gespreizten Stellung ist.

13. Anordnung (10) nach dem vorhergehenden Anspruch, **dadurch gekennzeichnet, dass** der Kopf (32) der Steuerstange einen im Wesentlichen kegelstumpfförmigen Verbindungsabschnitt (96) aufweist, der axial zwischen seiner kreisförmigen Auflagefläche (32) und seiner Rückhaltefläche (62) eingesetzt ist, um das Einführen des Endes der Steuerstange (12) durch die Klammer (38) hindurch zu ermöglichen, ohne die Trommel (70) zu betätigen.

14. Anordnung (10) nach Anspruch 3, **dadurch gekennzeichnet, dass** sie einen zylindrischen Zapfen (50) aufweist, der die ersten Mittel zum Halten der Klammer bilden, der sich zwischen den Flügeln (40) ausgehend von der Verbindungswand (42) des Zwischenstücks (20) der Betätigungsstange (22) erstreckt und in dessen einer Rille (100) sich ein gerundeter, elastischer oberer Verbindungsquerschenkel (64) einer haarnadelförmigen Klammer (38) einschiebt, deren im Wesentlichen parallele senkrechte Schenkel (61, 63) dazu dienen, die Stange (12) zu übergreifen und deren Kopf (32) gegen die Ausbauchung (36) axial zu blockieren.

15. Anordnung (10) nach dem vorhergehenden Anspruch, **dadurch gekennzeichnet, dass** der gerundete elastische obere Verbindungsquerschenkel (64) der Klammer (38) sich über mehr als 180 Grad in der Rille (100) des zylindrischen Zapfens (50) erstreckt, um die senkrechte Stellung der Klammer (38) zu bestimmen.

16. Anordnung (10) nach einem der Ansprüche 14 oder 15, **dadurch gekennzeichnet, dass** die im Wesentlichen parallelen senkrechten Schenkel (61, 63) der Klammer beweglich sind zwischen:
- einer verriegelten Stellung, in welcher sie zu einander elastisch zurückgestellt sind, wobei ein erster Schenkel durch die Entriegelungsmittel (52) und der zweite Schenkel (63) quer, insbesondere gegen eine Ausbauchung (102) des benachbarten Flügels (40) blockiert sind, in welchen sie parallel sind und sich axial gegen eine Rückhaltefläche (62) des Kopfes (32) der Stange (12) abstützen, die seiner kugelförmigen Auflagefläche (34) entgegengesetzt ist, so dass der Kopf (32) gegen die Ausbauchung (36) blockiert ist, und
- einer entriegelten Stellung, in der der erste senkrechte Schenkel (61) durch die Entriegelungsmittel (52) entriegelt ist und anschließend zeitweise durch die Stange (12) in quergerichteter Spreizung bezüglich des anderen Schenkels (63) elastisch beaufschlagt sein kann, um den Kopf (32) freizugeben und das Herausziehen der Stange (12) außerhalb des Zwischenstücks (20) der Betätigungsstange (22) zu ermöglichen, wobei der zweite Schenkel (63) blockiert bleibt.

17. Anordnung (10) nach dem vorhergehenden Anspruch, **dadurch gekennzeichnet, dass** der Flügel (40) des Zwischenstücks (20) der Betätigungsstange (22), der dem ersten Schenkel (61) der Klammer (38) benachbart ist, einen senkrechten Schlitz (103) aufweist, der dazu dient, den Durchgang des ersten Schenkels (61) aus dem Zwischenstück (20) der Betätigungsstange (22) zu erlauben, wenn der erste Schenkel (61) durch die Stange weggespreizt ist.

18. Anordnung (10) nach einem der Ansprüche 16 oder 17, **dadurch gekennzeichnet, dass** die Entriegelungsmittel (52) einen Riegel aufweisen (104), welcher drehbar um eine Achse (106) angebracht ist, von dem ein erstes Ende (108), das Antriebsmittel aufweist, in die Verbindungswand (42) über eine Bohrung (110) mündet, die einen Teil der zweiten Haltemittel (53) bildet, und welcher zwischen einer Blockierstellung, in der er die Spreizung des ersten Schenkels (61) der haarnadelförmigen Klammer (38) in Querrichtung verhindert, und einer eingezogenen Stellung, in der er die Spreizung des ersten Schenkels (61) der Klammer (38) in Querrichtung nicht verhindert, beweglich ist, und in der der erste Schenkel (61) der haarnadelförmigen Klammer (38) durch die Stange (12) in Spreizung beaufschlagt werden kann.

19. Anordnung (10) nach dem vorhergehenden Anspruch, **dadurch gekennzeichnet, dass** die Drehachse (106) des Riegels (104) zwischen den senkrechten Schenkeln (61, 63) der Klammer (38) angeordnet ist und dass der Riegel (104) sich parallel zur axialen Richtung zwischen zwei Querflanschen (112) erstreckt, die mit der Achse (106) fest verbunden sind, so dass der erste Schenkel (61) in der Blockierstellung zwischen einem Zwischenabschnitt (114) der zwischen der Flanschen (112) angeordneten Achse (106) und dem Riegel (104) quer blockiert ist, und so dass der Riegel (104) in der eingezogenen Stellung unter dem ersten Schenkel (61) geschwenkt ist, um dessen Spreizung zu ermöglichen.

20. Anordnung (10) nach dem vorhergehenden Anspruch in Kombination mit dem Anspruch 16, **dadurch gekennzeichnet, dass** die Ausbauchung (102) des Flügels (40), der dem zweiten Schenkel (63) der Klammer (38) benachbart ist, innerhalb des Zwischenstücks (20) der Betätigungsstange (22) entsprechend einer Querabmessung (e) vorragt, die dazu dient, die Querblockierung des zweiten Schenkels (63) mit einem Spiel (J') in der verriegelten Stellung der Klammer (38), die der Blockierstellung des Riegels (10) zugeordnet ist, zu ermöglichen.

21. Anordnung (10) nach dem vorhergehenden Anspruch, **dadurch gekennzeichnet, dass** die Drehachse (106) des Riegels (104) an ihrem Zwischenabschnitt (114) eine Abflachung (116) aufweist, die dem Riegel (104) entgegengesetzt angeordnet ist, um den zweiten Schenkel (63) ohne Spiel gegen die Ausbauchung (102) zu blockieren, wenn der Riegel (104) sich in seiner eingezogenen Stellung befindet, und um somit das Spreizen des ersten Schenkels (61) der Klammer zu erleichtern.

22. Anordnung (10) nach einem der Ansprüche 18 bis 21, **dadurch gekennzeichnet, dass** ein zweites Ende (118) der Achse (106) des Riegels in einem Steg (120) drehbar gelagert ist, der den anderen Teil der zweiten Haltemittel (53) bildet und zwischen den Flügeln (40) des Zwischenstücks (20) der Betätigungsstange (22) über mindestens zwei elastischen Stifte (124) befestigt ist, die durch Bohrungen (128) des Stegs (120) und Bohrungen (130) der Flügel (40) des Zwischenstücks (20) der Betätigungsstange (22) hindurchgehen.

23. Anordnung (10) nach einem der Ansprüche 18 bis 22, **dadurch gekennzeichnet, dass** die Antriebsmittel des ersten Endes (108) der Achse (106) des Riegels (104) eine vertiefte Prägung, insbesondere eine hohle Innensechskantprägung aufweisen.

24. Anordnung (10) nach einem der Ansprüche 18 bis 23, **dadurch gekennzeichnet, dass** die Rückhaltefläche (62) des Kopfes (32) der Steuerstange (12) in der Form einer kegelstumpfartigen Kugel ausgebildet ist, von welcher:
- ein hinterer minimaler Durchmesser dem Durchmesser der Steuerstange (12) entspricht, und
- ein maximaler Durchmesser größer als die Distanz zwischen den senkrechten parallelen Schenkeln (61, 63) der Klammer (38) in ihrer verriegelten Stellung und kleiner als die Distanz zwischen den senkrechten parallelen Schenkeln (61, 63) der Klammer (38), wenn sie sich in ihrer entriegelten Stellung befinden und der erste Schenkel (61) durch die Betätigungsstange (12) des Servomotors quer gespreizt ist.
